# EUROPEAN PATENT APPLICATION

(11) **EP 1 785 813 A1**
(43) Date of publication of application: **16.05.2007**
(21) Application number: 04772436.4
(22) Date of filing: 30.08.2004
(51) Int. Cl.: G06F 3/00

(54) **DATA PROCESSING APPARATUS, DATA PROCESSING METHOD, AND PROGRAM**

(71) Applicant: MITSUBISHI ELECTRIC CORPORATION, Chiyoda-ku Tokyo 100-8310 (JP)
(72) Inventor: SASAKI, Mikio c/o MITSUBISHI DENKI K.K., Tokyo 1008310 (JP); HATO, Junpei c/o MITSUBISHI DENKI K.K., Tokyo 1008310 (JP); KIRIMURA, Masayuk c/o MITSUBISHI DENKI K.K., Chiyoda-ku, Tokyo 1008310 (JP)
(74) Representative: Pfenning, Meinig & Partner GbR
(86) International application number: PCT/JP2004/012480
(87) International publication number: WO 2006/025087

(57) **Abstract**

An outputting/operating section A 105 is associated with an output device 3 and an outputting/operating section B 106 is associated with an output device 5. An analyzing section 102 analyzes HTML contents 101. Context data 104 that indicates an analysis result is stored in a context data storage buffer 103. The outputting/operating section A 105 generates output data to be supplied to the output device 3 based on shared context data. The outputting/operating section B 106 generates output data to be supplied to the output device 5, whose contents are different from those of the output data to be supplied to the output device 3, based on shared context data.

## Description

### Technical Field

The present invention relates to a technique that allows data to be displayed and handled on the screens of multiple terminal devices.

### Background Art

It's increasingly common for car navigation devices equipped in cars to be equipped with Web browsers. Some cars are equipped with displaying/operating terminals such as liquid crystal displays both in the front seat and the rear seat. In such an environment, it is allowed to display individual contents on a screen in the rear seat independently from those displayed on a screen in the front seat by playing DVDs (Digital Versatile Disk), etc. for example.

Information displayed in a car may be viewed by the driver in the front seat, therefore there is a restriction on the amount of information, such as the number of letters or characters, while driving. For rear seat occupants, however, there is no such restriction. Thus, it is now common practice that contents to be displayed and operations may differ depending on displaying/operating terminals.

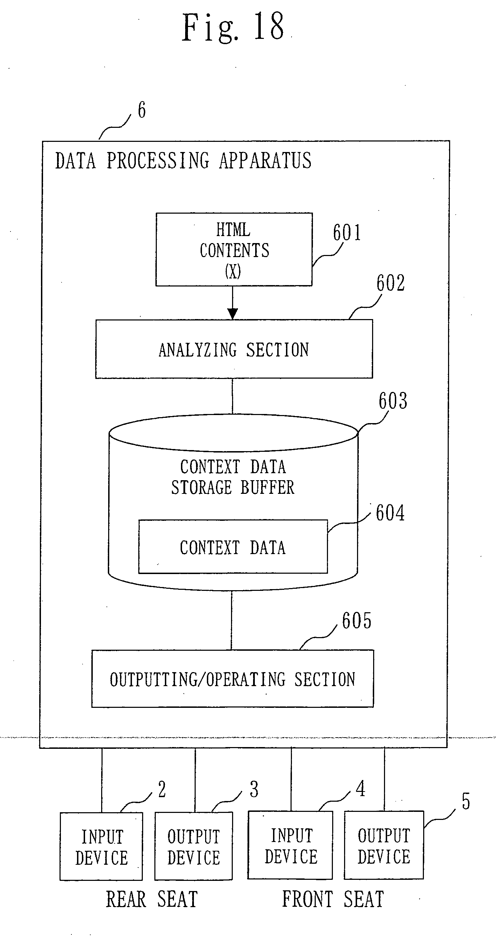

Fig. 18 shows a configuration example of a conventional data processing device.

The configuration example of Fig. 18 shows a data processing apparatus 6 in which there are a segment composed of HTML (HyperText Markup Language) contents, an analyzing section, a context data storage buffer, and an outputting/operating section. Then, the same data is outputted to an output device 5 equipped in the front seat and an output device 3 equipped in the rear seat of a car from the segment. Referring to Fig. 18, the data processing device 6 outputs the same data to the output device 5 in the front seat and the output device 3 in the rear seat. In the data processing device 6 , the HTML contents (X) 601 are the basis of contents to be outputted to the output device 5 and the output device 3. The analyzing section 602 analyzes the HTML contents and outputs context data 604 as analysis result information. The context data 604 is outputted as an analysis result. A context data storage buffer 603 stores the context data 604 from the analyzing section 602. An outputting/operating section 605 generates output data common to the output device 5 and the output device 3 based on the context data 604, and outputs the output data to the output device 5 and the output device 3. This allows occupants to view the same data displayed on the output device 5 and the output device 3.

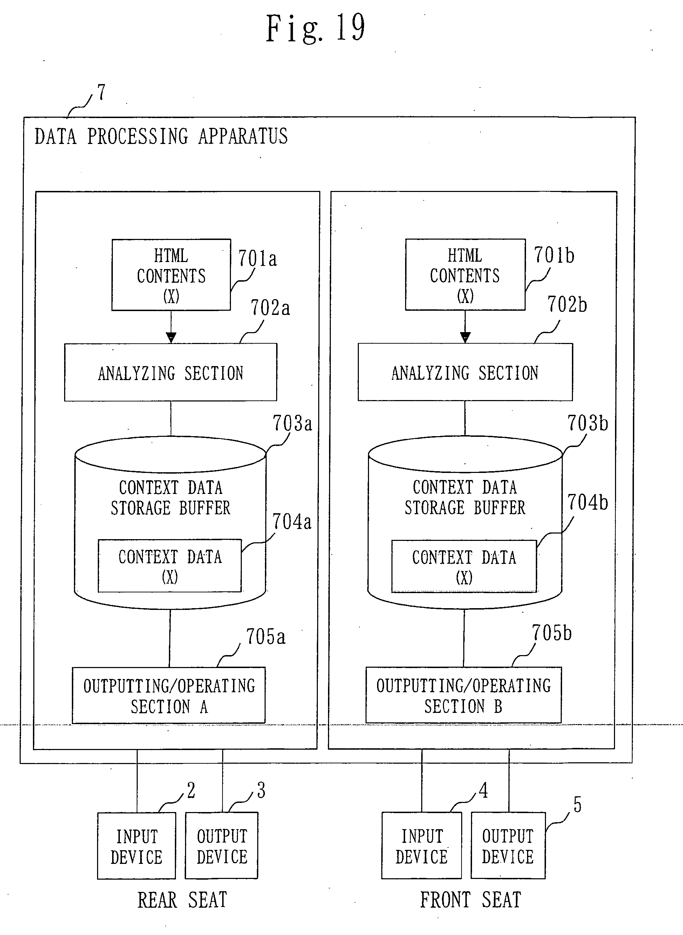

Fig. 19 shows another configuration example of a conventional data processing apparatus.

The configuration example of Fig. 19 shows a data processing apparatus in which there are segments separately provided for the output device 5 equipped in the front seat and the output device equipped in the rear seat of a car. Contents are processed separately by the segments and outputted to the output device 5 and the output device 3. This allows the output device 5 and output device 3 to output contents independent from each other.

### Disclosure of the Invention

### Problems to be Solved by the Invention

The example of Fig. 18, however, has difficulty in changing the methods of display and operation depending on the output devices (equipped in the front and rear seats in a car). The example of Fig. 19 allows separate displays and operations depending on the output devices, but there is a disadvantage of a large amount of memory and computation required for executing multiple programs or having multiple processors.

The same displays or operations are thus required for multiple output devices with the conventional techniques. When the same displays or operations are not intended, then separate processing is needed for each output device, resulting in increase in consumption of resources such as memories, etc. This poses a problem.

In addition to this, it is not possible for the conventional configurations to select information intended by the user from among a variety of items of information.

Given the circumstances, it is a primary object of the present invention to solve those problems.

### Means to Solve the Problems

A data processing apparatus according to the present invention may be connected to a first output device and a second output device. The data processing apparatus may include:
a data analyzing section that may receive basic data, which may be a share basis of data outputted from the first output device and data outputted from the second output device, and analyze the basic data received; and
a first output data generating section and a second output data generating section that may receive an analysis result of the basic data by the data analyzing section, and share the analysis data of the basic data by the data analyzing section.
The first output data generating section may generate data, which is to be outputted from the first output device as first output data, based on the analysis result of the basic data by the data analyzing section, and output the first output data generated to the first output device.
The second output data generating section may generate data to be outputted from the second output device, whose contents are different from those of the first output data as second output data, based on the analysis result of the basic data by the data analyzing section, and output the second output data generated to the second output device.

### Effect of the Invention

Thus, according to the present invention, first output data for a first output device and second output data for a second output device, whose contents are different from those of the first output data, are generated based on shared basic data. This may serve to output different contents to different output devices with a limited amount of memory and computation.

Thus, according to the present invention, it is possible to reflect the contents of an operation on output data displayed on one output device on the output data displayed on the other output device. This may facilitate information sharing.

Thus, according to the present invention, it is possible to display on one output device output data displayed on the other output device even when each output device has different output data to be outputted. This may facilitate information sharing.

Thus, according to the present invention, it is possible to manage the output history of output data, and specify the requester of output data. This allows previously outputted output data to be outputted again separately depending on the requester of the output data.

### Best Mode for Carrying out the Invention

### Embodiment 1.

An example of a data processing apparatus that is mounted on a car is described as an embodiment.

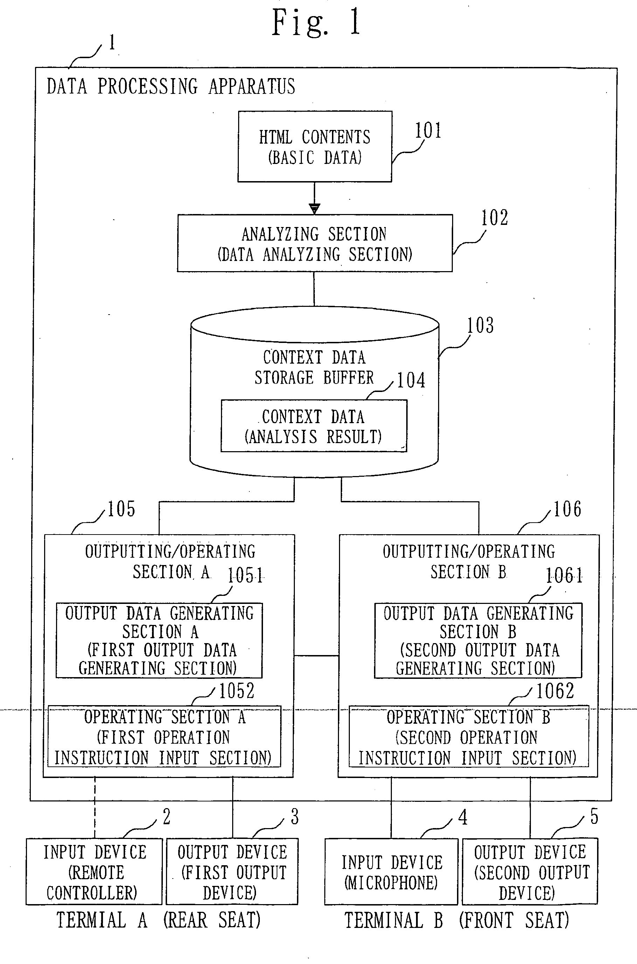

Fig. 1 is a block diagram illustrating an example of a configuration of a data processing apparatus 1 when mounted on a car according to a first embodiment.

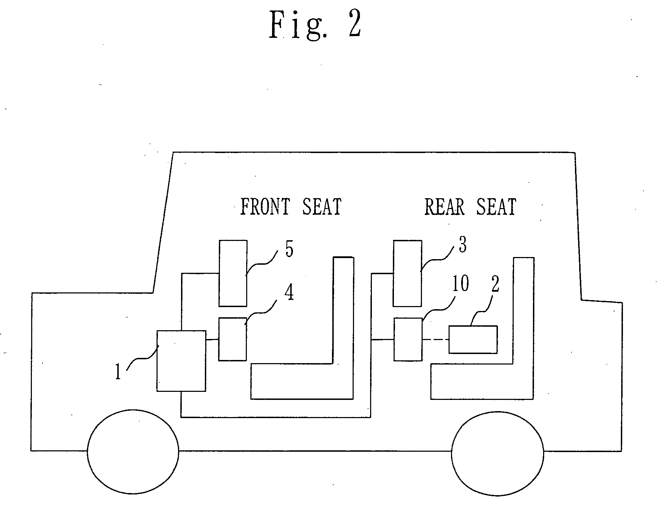

Referring to Fig. 1, the reference numeral 1 denotes a data processing apparatus, which is connected to a terminal A placed in the rear seat and a terminal B placed in the front seat in a car. The terminal A is configured to include an input device 2 and an output device 3, and the terminal B is configured to include an input device 4 and an output device 5. The input device 2 of the terminal A is a remote controller, for example. The input device 4 of the terminal B is a microphone, for example. The output device 3 of the terminal A and the output device 5 of the terminal B are liquid crystal displays, for example. The output device 3 of the terminal A is an example of a first output device. The output device 5 of the terminal B is an example of a second output device. Fig. 2 is a simplified diagram in which the data processing apparatus 1, the terminal A and the terminal B are mounted in a car. Referring to Fig. 2, a receiver 10, which is a part of an outputting/operating section A 105, receives a signal from a remote controller.

Further referring to Fig. 1, HTML (HyperText Markup Languate) contents 101 are subject to browsing. The HTML contents shown in Fig. 1 may be replaced by any contents approved by other standards. The HTML contents 101 are the shared basis of data to be outputted to the output device 3 of the terminal A (the first output device) and data to be outputted to the output device 4 of the terminal B (the second output device). Thus the HTML contents 101 are an example of basic data. An analyzing section 102 analyzes the HTML contents 101. The analyzing section 102 performs the context analysis of the HTML contents, and outputs context data 104 as information indicating an analysis result. The analyzing section 102 is an example of a data analyzing section. The context data 104, which is thus outputted as an analysis result, is information that is processed by the outputting/operating section A 105 and an outputting/operating section B 106, which will be discussed later in detail. The context data 104 is information indicating an analysis result by the analyzing section 102. A context data storage buffer 103 stores the context data 104.

According to this embodiment, the outputting/operating section A 105 corresponds to the terminal A, and the outputting/operating section B 106 corresponds to the terminal B. The outputting/operating section A 105 and the outputting/operating section B 106 are configured the same. The outputting/operating section A 105 contains an output data generating section A 1051 and an operating section A 1052. The output data generating section A 1051 processes the context data 104 to generate output data so that a user of the terminal A can view and listen, , and outputs generated output data to the output device 3 of the terminal A. The output data generating section A 1051 is an example of a first output data generating section. The operating section A 1052 receives an operation instruction from a user of the terminal A via the input device 2 of the terminal A, and operates in accordance with the received operation instruction. The operating section A is applicable for a voice recognition based operation, a remote control operation, etc. With the example of Fig. 1, the operating section A 1052 accepts an operation instruction from the input device 2, which is a remote controller. The operating section A 1052 is an example of a first operation instruction input section. The outputting/operating section B 106 contains an output data generating section B 1061 and an operating section B 1062. The output data generating section B 1061 processes the context data 104 to generate output data so that a user of the terminal B can view and listen, and outputs generated output data to the output device 5 of the terminal B. The output data generating section B 1061 is an example of a second output data generating section. The operating section B 1062 receives an operation instruction from a user of the terminal B via the input device 4 of the terminal B, and operates in accordance with the received operation instruction. The operating section B is applicable for a voice recognition based operation, a remote control operation, etc. With the example of Fig. 1, the operating section A accepts an operation instruction from the input device 4, which is a microphone. The operating section B 1062 is an example of a second operation instruction input section.

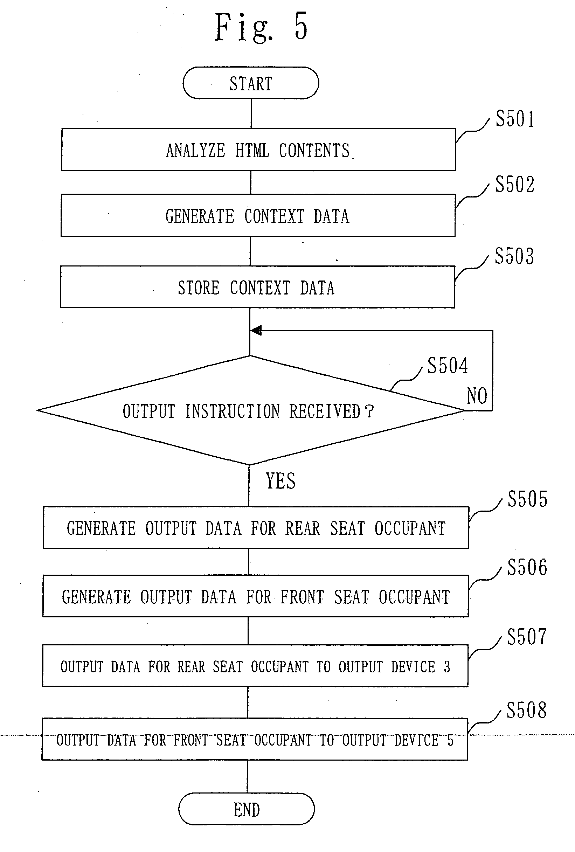

An example of an operation of the data processing apparatus 1 of this embodiment will now be discussed with reference to Fig. 5.

Firstly, the analyzing section 102 analyzes HTML contents (S501), and generates the context data 104 indicating an analysis result (S502).

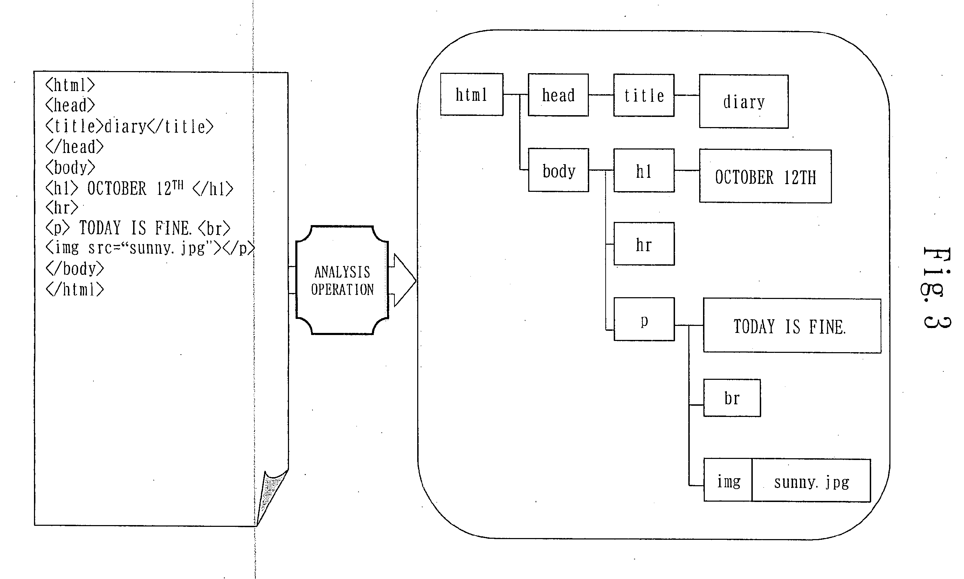

Fig. 3 shows an example of contents analysis performed by the analyzing section 102. The analyzing section 102 analyzes the document structure, etc. of the HTML contents 101 in accordance with a description indicated by a tag description shown in the HTML contents 101, and generates context data indicating an analysis result. In the case of Fig. 3, the HTML contents 101 on the left side is analyzed by the analyzing section 102, thereby generating context data on the right side. Context data is generated on a memory, in general, with a large amount of resource consumption. According to this embodiment, context data is shared by the outputting/operating section A 105 and the outputting/operating section B 106, thereby reducing the amount of memory used.

The context data 104 generated at the analyzing section 102 is stored in the context data storage buffer 103 (S503).

Secondly, it is determined whether or not the operating section A 1052 of the outputting/operating section A 105 or the outputting/operating section B 106 of the operating section B 1062 has received an output instruction from the input device 2 or the input device 4, respectively, instructing an output of output data (S504). When the output instruction is received, then the output instruction is transferred to the output data generating section A 1051 as well as the output data generating section B 1061.

Next, the output data generating section A 1051 generates output data for rear seat occupants (first output data) based on the context data 104 stored in the context data storage buffer 103 (S505). The output data generating section B 1061 generates output data for front seat occupants (second output data) based on the context data 104 stored in the context data storage buffer 103 (S506). It must be noted that the output data generating section B generates data, as the output data for front seat occupants, whose contents are different from those of the output data for rear occupants that is generated by the output data generating section A. Specifically, the screen of a display for front seat occupants is often smaller in size than that of a display for rear seat occupants. In addition to this, it is desirable that output data for front seat occupants be minimum required data for the driver to view and for his quick grasp of the contents. For this reason, the output data for front seat occupants should be data in which certain portions of data (e.g., image data portions, etc.) are removed from output data for rear seat occupants. Then, the output data generating section A 1051 outputs the output data for rear seat occupants to the output device 3, thereby outputting the output data for rear seat occupants from the output device 3 (S507). The output data generating section B 1061 outputs the output data for rear seat occupants to the output device 5, thereby outputting the output data for front seat occupants from the output device 5 (S508).

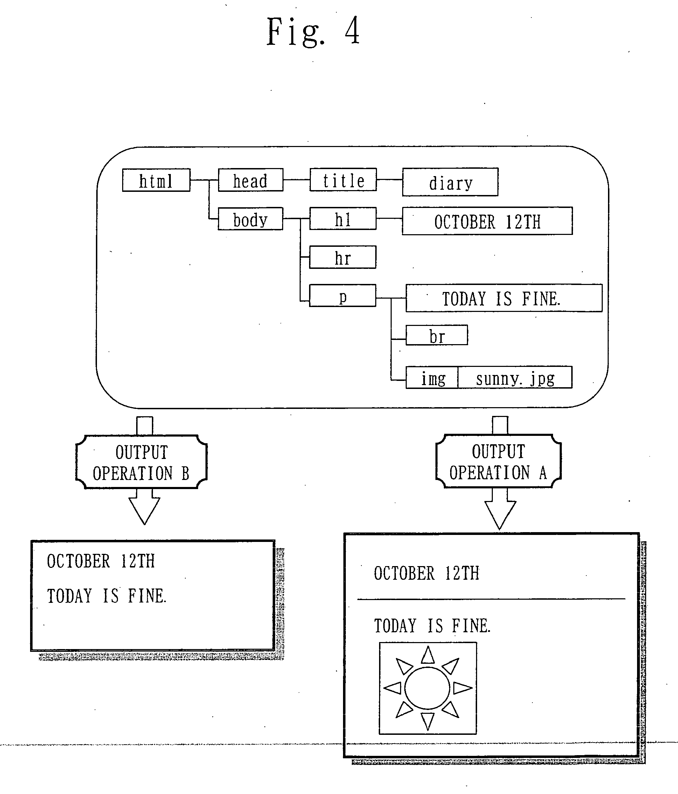

Fig. 4 shows an example of display processing of output data for front seat occupants and output data for rear seat occupants. The figure shows that displayed contents are different between the outputting/operating section A 105 and the outputting/operating section B 106. As mentioned earlier, the example of Fig. 4 indicates that the amount of characters and information to be displayed varies depending on the terminal. With the output of the outputting/operating section A 105, there is no display restriction, and therefore image information may be displayed as well. With the output of the outputting/operating section B 106, however, the display is limited only to a text display but not to a graphic display. Thus, a varieties of display methods may be set to display the same context data in accordance with the types of restrictions on terminals.

With the example of Fig. 5, output data for rear seat occupants and output data for front seat occupants are generated simultaneously, and outputted simultaneously. This is an example only. There is no need that the generating timing and the output timing between the output data for rear seat occupants and the output data for front seat occupants meet. It is only required, in other words, that the output data for rear seat occupants and the output data for front seat occupants are generated based on the same context data, and that the contents are different between the output data for rear seat occupants and the output data for front seat occupants. If these conditions are met, the generating timing and the outputting timing are no object.

By the configuration discussed above, a data processing apparatus that is responsive to a unique display and operation to each terminal may be achieved with the outputting/operating section for each terminal, and a memory saving data processing apparatus may be achieved with the sharing of the context data.

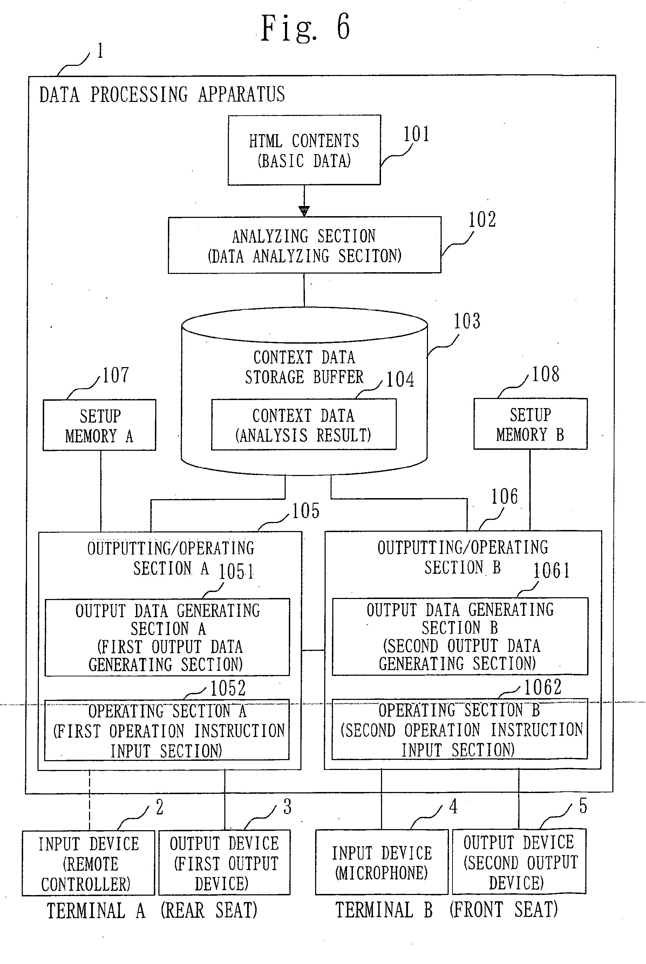

It must be noted that the user may reset the format of output data (the presence or absence of image data, etc.) generated by the output data generating section A 1051 and/or the format of output data generated by the output data generating section B 1061 by sending sequentially an indication to the input device 2 or the input device 5. In this case, as shown in Fig. 6, a setup memory A 107 for storing the format of output data of the output data generating section A 1051 and a setup memory B 108 for storing the format of output data of the output data generating section B 1061 may be provided. Then, the output data generating section A 1051 may read the format of output data stored in the setup memory A 107, and generate output data based on a read format. The output data generating section B 1061 may read the format of output data stored in the set up memory B 108, and generate output data based on a read format. In such a system, the formats of output data may be changed in response to weather conditions, dates, days of week, time zones, traffic conditions, travel speeds, etc, for example.

### Embodiment 2.

The configuration of the data processing apparatus 1 is the same as that discussed in the first embodiment. An outputting/operating section is different from that discussed in the first embodiment in that information about an operation result is reflected on context data. In addition to this, the outputting/operating section detects a change in context data.

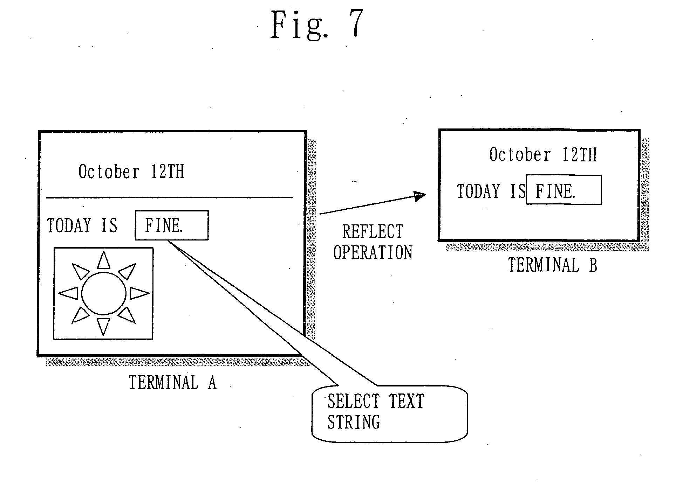

An operation of the data processing apparatus 1 of this embodiment is discussed with reference to Fig. 7. The outputting/operating section A 105 and the outputting/operating section B 106 use the same context data in this embodiment like the first embodiment. Fig. 7 shows on the left side an example of data that is generated by the outputting/operating section A 105 and displayed on the output device 3 of the terminal A of the rear seat. Fig. 7 also shows on the right side an example of data that is generated by the outputting/operating section B 106 and displayed on the output device 5 of the terminal B of the front seat. Fig. 7 indicates that when a user enters the input device 2 an operation instruction to select a part of a text string of data displayed on the output device 3 of the terminal A, the operation to select the same is reflected on a text string displayed on the output device 5 of the terminal B. As a browser operation for text display, text strings may be selected with an ordinary browser. The data processing apparatus 1 of this embodiment is assumed to have such a function.

With the example of Fig. 7, a particular portion of a text string, "fine", displayed on the output device 3 of the terminal A is selected, and this "fine" portion is actively displayed. Then, on the device 5 of the terminal B is such selection reflected, and the "fine" portion is actively displayed alike.

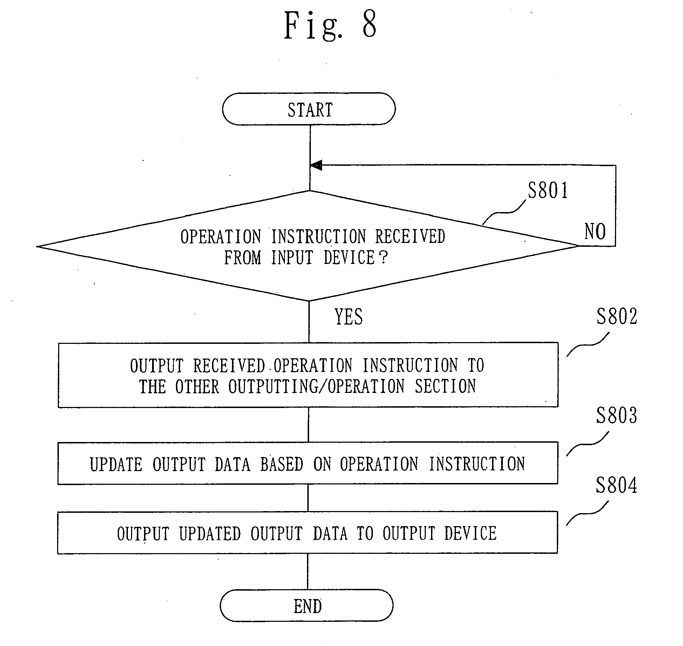

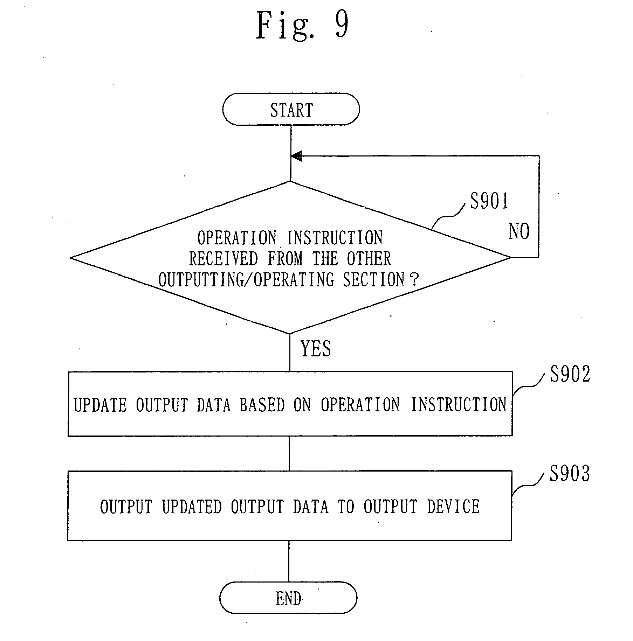

An example of an operation of the data processing apparatus 1 of this embodiment will be now discussed with reference to Fig. 8 and Fig. 9.

Fig. 8 shows an example of an operation of the outputting/operating section that receives an operation process originally from a user. Fig. 9 shows an example of an operation of the outputting/operating section that receives an operation process from a user via the other outputting/operating section.

Firstly, with reference to Fig. 8, the operating section A 1052 or operating section B 1062 determines whether or not an operation instruction is received from a corresponding input device (S801). With the example of Fig. 7, it is determined whether or not the particular portion of the text string, "fine", has been selected.

Secondly, when the operational instruction has been received from a user, then the operating section A 1052 or the operating section B 1062 outputs the operation instruction received to the other outputting/operating section (S802). In other words, with the example of Fig. 7, the selection of the particular portion of the text string, "fine", is outputted to the other outputting/operating section.

Then, the operating section outputs an operation instruction to the output data generating section. The output data generating section updates output data to reflect the operation instruction received (S803). More specifically, with the example of Fig. 7, output data is updated so that the "fine" portion is actively displayed.

After this process, updated output data is outputted to a corresponding output device (S804).

With reference to Fig. 9, the operating section A 1052 or the operating section B 1062 determines whether or not an operation instruction is received from the other outputting/operating section (S901). With the example of Fig. 7, it is determined whether or not the selection of the particular portion of the text string, "fine", has been received from the other outputting/operating section.

When the operation instruction is received from the other outputting/operating section, then the operation instruction received is outputted to the output data generating section. The output data generating section then updates output data to reflect the operation instruction from the other operating section (S902). More specifically, with the example of Fig. 7, output data is updated so that the "fine" portion is actively displayed.

After this process, updated output data is outputted to a corresponding output device (S903).

It must be noted that the operation instruction received from the input device 2 for output data outputted from the output device 3 (the first output data) corresponds to a first operation instruction. The above example shows when the operation instruction for the output data (the first output data) outputted from the output device 3 is reflected on the output data (the second output data) outputted from the output device 5. Conversely, however, it is also possible that the operation instruction for output data (the second output data) outputted form the output device 5 is reflected on the output data (the first output data) outputted from the output device 3. In this case, the operation instruction inputted from the input device 4 for the output data (the second output data) outputted form the output device 5 corresponds to a second operation instruction.
Thus, according to this embodiment, an operation of one terminal may be instantly reflected on the other terminal, thereby allowing state sharing. This may be applicable to the case where a user operating the terminal A in the rear seat wishes to give an instruction to a user watching the terminal B in the front seat with particular information within a page they are watching.

With a terminal in which context is outputted by voice, a specified portion may be re-outputted by voice, for example. Thus, a variety of output methods may be available depending on terminals.

### Embodiment 3.

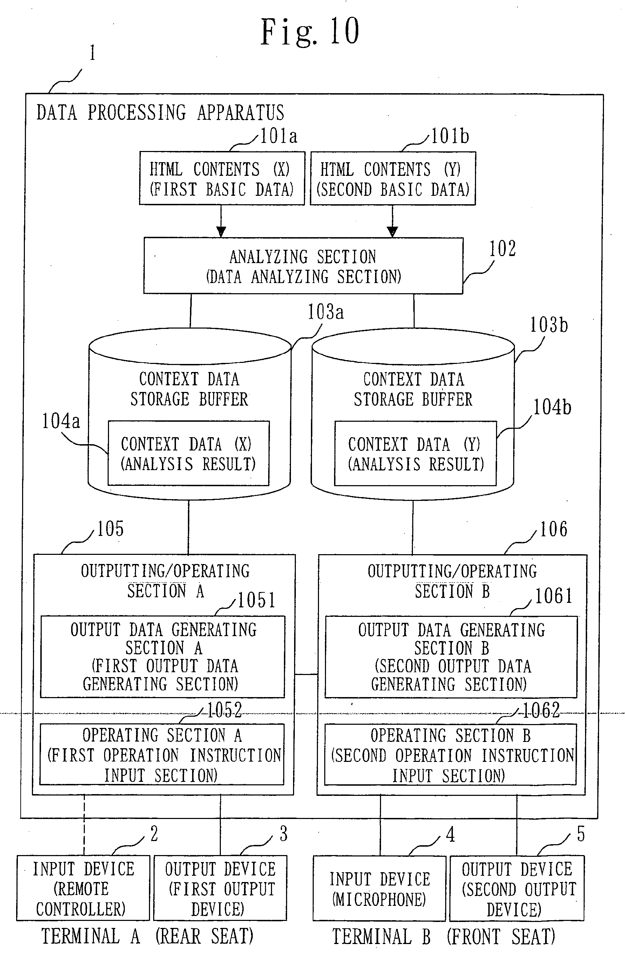

Fig. 10 is a block diagram illustrating an example of a configuration of a data processing apparatus according to a third embodiment. The analyzing section 102 has the same function as that discussed in the first embodiment. The analyzing section 102 provides the function to analyze acquired HTML contents and generate context data. According to this embodiment, there are provided HTML contents (X) 101a for the output device 3 of the terminal A and HTML contents (Y) 101b for the output device 5 of the terminal B, contents of which are different from each other. The HTML contents (X) 101a are an example of first basic data. The HTML contents (Y) 101b are an example of second basic data. The analyzing section 102 analyzes the HTML contents (X) 101a and the HTML contents (Y) 101b. The analyzing section 102 stores context data (X) 104a indicating an analysis result of the HTML contents (X) in a context data storage buffer 103a. The analyzing section 102 stores context data (Y) 104b indicating an analysis result of the HTML contents (Y) in a context data storage buffer 103b. It must be noted that the context data storage buffer 103a and the context data storage buffer 103b may be configured on the same memory. The output data generating section A 1051 of the outputting/operating section A 105 generates output data for the output device 3 based on the context data (X) stored in the context data storage buffer 103a, and outputs the generated output data to the output device 3. The output data generating section B 1061 of the outputting/operating section B 106 generates output data for the output device 5 based on the context data (Y) stored in the context data storage buffer 103b, and outputs the generated output data to the output device 5.

Thus, according to this embodiment, when a process proceeds to next contents through a link in web browsing on a terminal, then a process is performed to acquire and input the next contents to the analyzing section, thereby displaying the next contents. In this case, there is no need of referring to the same contents in two or more terminals. It is only required to display/operate it as other contents in each outputting/operating section. With the example of the figure, output data based on the HTML contents (X) may be browsed in the terminal A of the outputting/operating section A and output data based on the HTML contents (Y) may be browsed in the terminal B of the outputting/operating section B, as individual contents, respectively.

Thus, according to this embodiment allowing multiple items of context data to be held, each terminal may handle different contents from each other r .

### Embodiment 4.

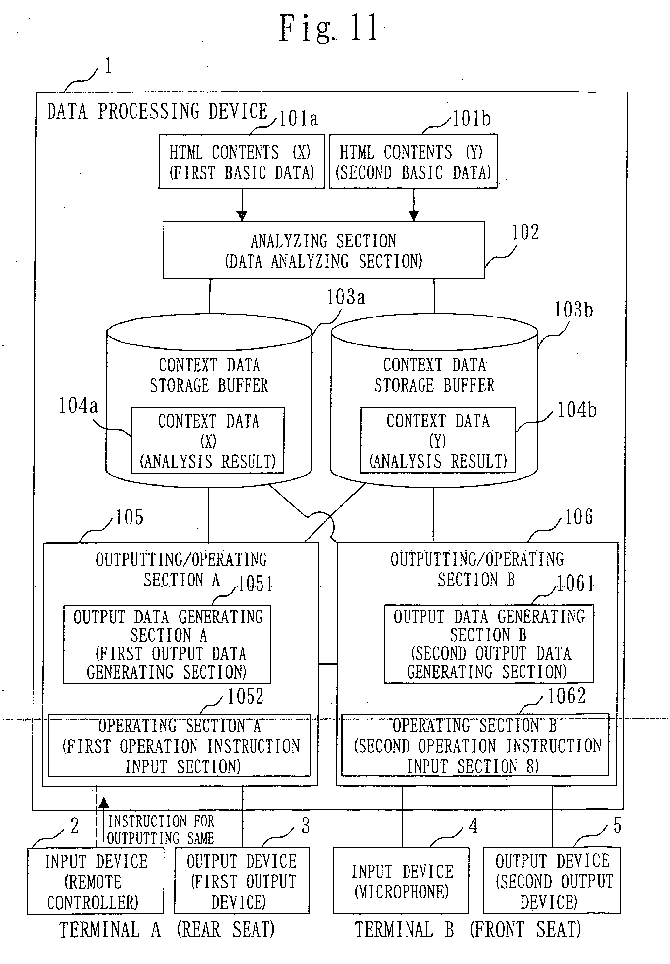

Fig. 11 is a block diagram illustrating an example of a configuration of a data processing apparatus according to this embodiment. The data processing apparatus is configured the same as that of Fig. 10. The output data generating section A 1051 of the outputting/operating section A 105 is however allowed to access not only the context data storage buffer 103a but also the context data storage buffer 103b. Likewise, the output data generating section B 1061 of the outputting/operating section B 106 is allowed to access not only the context data storage buffer 103b but also the context data storage buffer 103a.

Firstly, as discussed in the third embodiment, the condition is that the terminal A connected to the outputting/operating section A 105 browses output data based on the HTML contents (X), and the terminal B connected to the outputting/operating section B 106 browses output data based on the HTML contents (Y). When a user watching the terminal A wants a user watching the terminal B to watch the same page, the contents information of the terminal A may be outputted to the terminal B by the following procedures.

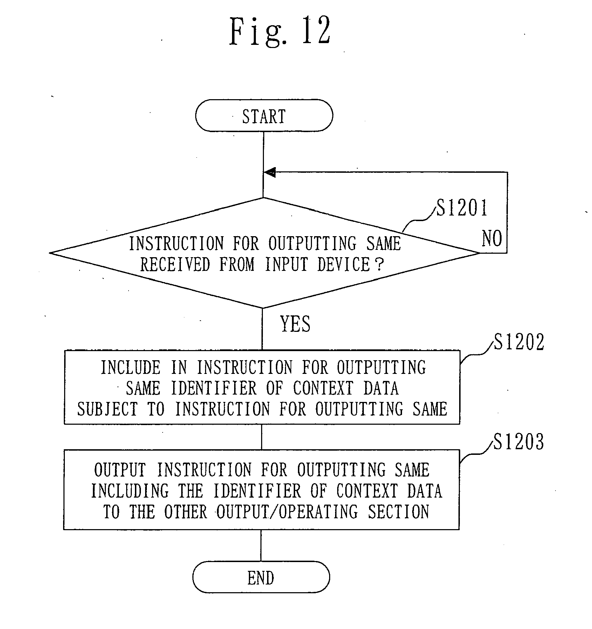

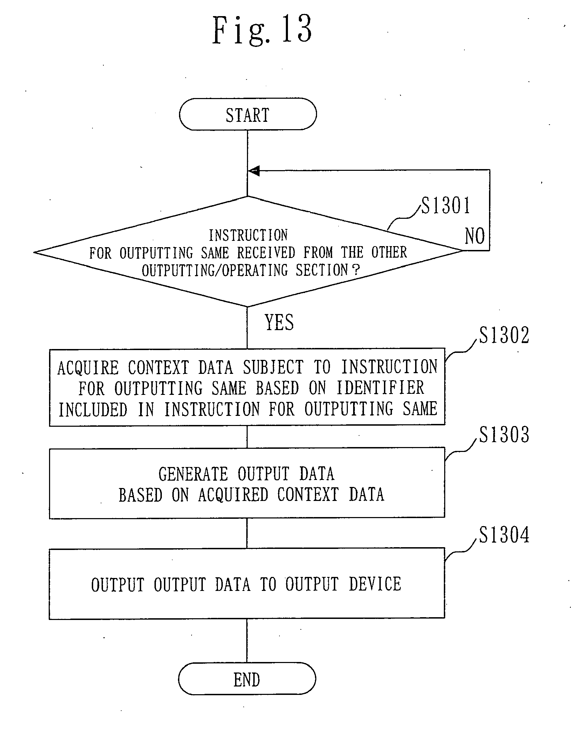

Fig. 12 shows an example of an operation of an outputting/operating section that receives an instruction originally from a user. An explanation will be given of an operation performed by the outputting/operating section A 105. Fig. 13 shows an example of an operation of an outputting/operating section that receives an instruction from the other outputting/operating section. This will be explained below as an operation performed by the outputting/operating section B 106.

Firstly, referring to Fig. 12, a user of the terminal A gives an instruction for outputting the same, through the input device 2 to the operating section A 1052 of the outputting/operating section A 105, the instruction for outputting the same instructs to output the same contents as those of output data that is displayed on the output device 3 of the terminal A to the output device 5 of the terminal B. This operation may be implemented by using a function available on a terminal such as a remote control operation. The operating section A 1052 of the outputting/operating section A 105 determines whether or not the instruction for outputting the same is received from the corresponding input device 2 (S1201). When the instruction for outputting the same is received, then the operating section A 1052 includes the identifier of context data (context data (X) of Fig. 11) that is subject to the instruction for outputting the same in the instruction for outputting the same received from the input device 2 (S1202). The identifier of context data subject to the instruction for outputting the same may be such as address information on a memory, for example. Secondly, the operating section A 1052 outputs the instruction for outputting the same with the identifier of context data included to the other outputting/operating section B.

Referring now to Fig. 13, the operating section B 1062 determines whether or not the instruction for outputting the same is received from the other outputting/operating section B (S1301). When the instruction for outputting the same is received, then the output data generating section B 1061 acquires corresponding context data (context data (X) of Fig. 11) based on the identifier included in the instruction for outputting the same (S1302). The output data generating section B 1061 then generates output data based on acquired context data (S1303), and outputs generated output data to the corresponding output device 5 (S1304). It is also possible that the output data generating section B 1061 generates output data with removing particular data portions (image data, etc.), as discussed in the first embodiment.

Thus, according to this embodiment, information referred to on one terminal may easily be displayed on the other terminal. In addition to this, there is no need of further analysis and further generation of context data, thereby reducing the amount of resources to be used.

### Embodiment 5.

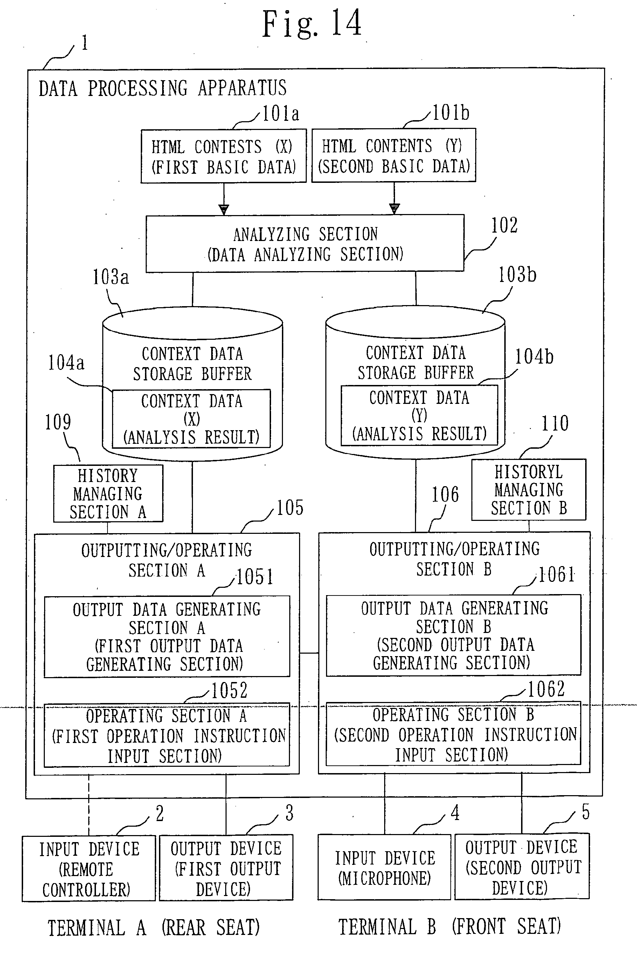

Fig. 14 is a block diagram illustrating an example of a configuration of the data processing apparatus 1 according to this embodiment. A configuration of Fig. 14 modifies the configuration of Fig. 10 by adding a history managing section A 109 and a history managing section B 110. The history managing section A 109 accumulates/manages the history information of output data outputted to the output device 3 from the outputting/operating section 105. The history managing section B 110 accumulates/manages the history information of output data outputted to the output device 5 from the outputting/operating section 106.

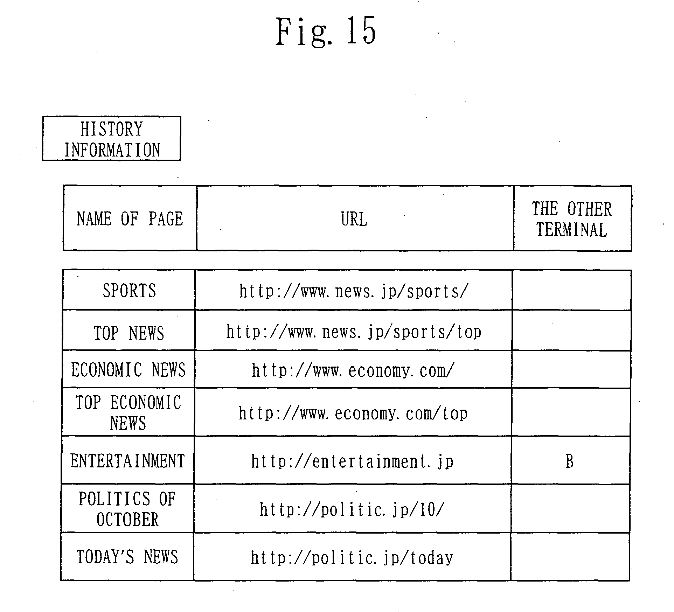

Fig. 15 shows an example of history information to be managed by the history managing section A 109 and the history managing section B 110. The history managing section A 109 and the history managing section B 110 accumulate in a form of a list, etc. information on such as the URLs (Uniform Resource Locator) of Web pages that were referred to by a user. When stored, the pages may be distinguished between pages that are originally referred to by a user by proceeding through a link and pages that are referred to under a request for outputting the same from the other terminal, as discussed in the third embodiment. With an example in Fig. 15, information representing history having "entertainment" as the name of a page, "http://entaertainment.jp/" as the URL, and "B" in the item of the other terminal, is registered , for example. This registration indicates that the page is the one for which the terminal B issued the request for outputting the same.

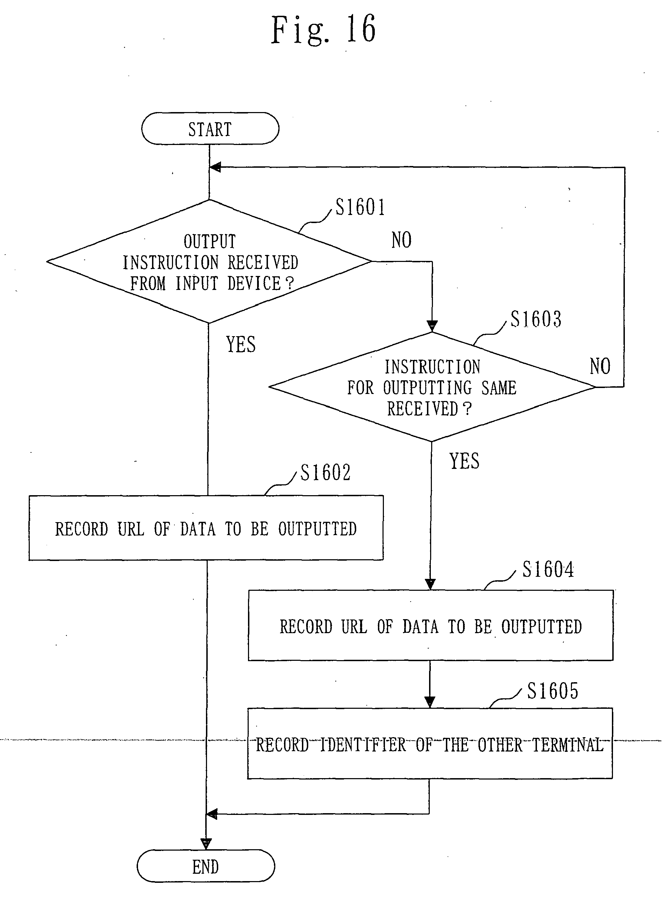

Fig. 16 shows an example of an operation of the outputting/operating section A 105 or the outputting/operating section B 106 according to this embodiment. An explanation will be given below of an operation performed by the outputting/operating section A 105.

Firstly, the operating section A 1052 of the outputting/operating section A 105 determines whether or not an output instruction is received from the corresponding input device 2 (S1601). When an output instruction is received, then the operating section A 1052 notifies the history managing section A 109 of the URL of data to be outputted. The history managing section A 109 then records the notified URL of data to be outputted (S1602). In S1601, when it is determined that the output instruction is not received, the operating section A 1052 then determines whether or not the instruction for outputting the same is received from the outputting/operating section 106 (S1603). When the instruction for outputting the same is received, the operating section A 1052 then notifies the history managing section A 109 of the URL of data to be outputted that is indicated by the instruction for outputting the same. The history managing section A 109 then records the notified URL of data to be outputted (S1064) and records the identifier of the other terminal B (S1605).

Thus, according to this embodiment, the generation history of output data is recorded for each outputting/operating section after identifying which terminal context data the output data is based on is called by. In other words, it is identified which context data (an analysis result of basic data) the output data is based on.

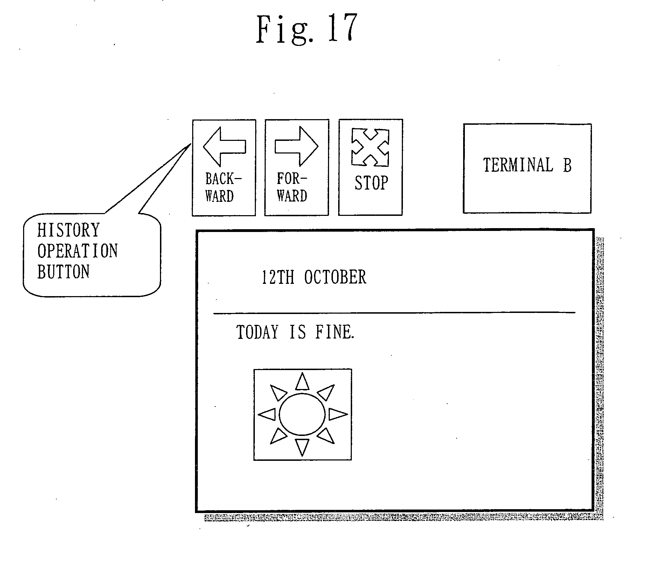

Fig. 17 shows an example of a history operation performed on a browser display screen of the output device of the terminal A or the terminal B. On the upper screen are shown buttons of "backward", "forward", etc. for history operations. When a "backward" button is selected, then a previous screen page may be called up.

In such situation, when a display screen image is one that was called by the other terminal, it may be identified that the screen image was called up, by using information registered in the item of "terminal" of the history. The example of Fig. 17 shows at the top right of the screen that the screen image is received from the terminal B. For the screen image of an original Web page through self-browsing, there may be nothing displayed, for example. Such distinction may thus be possible.

The history managing section may be set so that available pages in a "backward" operation are limited to those referred to in the past or to those requested by the other terminal. This makes it possible to refer only to pages to which one referred in his own past history, or to those for which the other terminal requested.

With further reference to the foregoing embodiments, the data processing apparatus is explained when connected to the terminals mounted on a car in the front seat and the rear seat. This is not the only possibility. The embodiments are applicable to any data processing apparatus that is connected to two or more terminals.

With reference to the foregoing embodiments, the data processing apparatus may be implemented by a computer.

The data processing apparatus 1 is equipped with a Central Processing Unit (CPU), which is not shown, for executing a program.

The CPU may be connected to a Read Only Memory (ROM), a Random Access Memory (RAM), a communication board, a display unit, a key board (K/B), a mouse, a Flexible Disk Drive (FDD), a Compact Disk Drive (CDD), a magnetic disk drive, an optical disk drive, a printer unit, a scanner unit, etc. via a bus, for example.

The RAM is a type of a volatile memory. The ROM, the FDD, the CDD, the magnetic disk drive, the optical disk drive are types of nonvolatile memories. These are examples of memories or storage sections.

Information handled by the data processing apparatus 1 described in the foregoing embodiments is stored in a memory or a storage section, and read by the respective sections in the data processing apparatus 1.

The magnetic disk drive stores an operating system (OS), a window system, a cluster of programs, and a cluster of files (database).

The cluster of programs is executed by the CPU, the OS, and the window system.

The respective sections of the data processing apparatus 1 may be configured in part or in full by a computer operable program. Or otherwise, they may be implemented by a firmware that is stored in the ROM. Or otherwise, they may be embodied by software, hardware, or a combination of software, hardware, and firmware.

The cluster of programs includes programs for making the CPU execute the processes described as "sections" in the foregoing embodiments. These programs are generated by a computer language, such as C language, HTML, SGML, or XML, for example.

The programs are stored by other types of storage medium, such as a magnetic disk drive, a Flexible Disk (FD), an optical disk, a Compact Disk (CD), a Mini Disk, (MD), a Digital Versatile Disc (DVD), etc., then read and executed by the CPU.

### Brief Description of the Drawings

[Fig. 1] It is a diagram showing an example of a configuration of a data processing apparatus according to a first embodiment.
[Fig. 2] It is a diagram showing an example of mounting the data processing apparatus on a car according to the first embodiment.
[Fig. 3] It is a diagram showing an example of analyzing contents according to the first embodiment.
[Fig. 4] It is a diagram showing an example of displaying output data unique to each terminal on multiple terminals according to the first embodiment.
[Fig. 5] It is a diagram showing an example of an operation of the data processing apparatus according to the first embodiment.
[Fig. 6] It is a diagram showing an example of a configuration of the data processing apparatus according to the first embodiment.
[Fig. 7] It is a diagram showing an example of how to work on contents according to a second embodiment.
[Fig. 8] It is a diagram showing an example of an operation of a data processing apparatus according to the second embodiment.
[Fig. 9] It is a diagram showing an example of the operation of the data processing apparatus according to the second embodiment.
[Fig. 10] It is a diagram showing an example of a configuration of a data processing apparatus according to a third embodiment.
[Fig. 11] It is a diagram showing an example of a configuration of a data processing apparatus according to a fourth embodiment.
[Fig. 12] It is a diagram showing an example of an operation of the data processing apparatus according to the fourth embodiment.
[Fig. 13] It is a diagram showing an example of the operation of the data processing apparatus according to the fourth embodiment.
[Fig. 14] It is a diagram showing an example of a configuration of a data processing apparatus according to a fifth embodiment.
[Fig. 15] It is a diagram showing an example of history information according to the fifth embodiment.
[Fig. 16] It is a diagram showing an example of an operation of the data processing apparatus according to the fifth embodiment.
[Fig. 17] It is a diagram showing an example of a working screen using the history information according to the fifth embodiment.
[Fig. 18] It is a diagram showing an example of a configuration of a conventional data processing apparatus.
[Fig. 19] It is a diagram showing an example of a configuration of a conventional data processing apparatus.

## Claims

1. A data processing apparatus connected to a first output device and a second output device, the data processing apparatus comprising:
a data analyzing section that receives basic data, which is a share basis of data outputted from the first output device and data outputted from the second output device, and analyzes the basic data received; and
a first output data generating section and a second output data generating section that receive an analysis result of the basic data by the data analyzing section, and share the analysis data of the basic data by the data analyzing section,
wherein the first output data generating section generates data, which is to be outputted from the first output device as first output data, based on the analysis result of the basic data by the data analyzing section, and outputs the first output data generated to the first output device, and
wherein the second output data generating section generates data to be outputted from the second output device, whose contents are different from those of the first output data as second output data, based on the analysis result of the basic data by the data analyzing section, and outputs the second output data generated to the second output device.

2. The data processing apparatus of claim 1, wherein the data analyzing section performs a context analysis for analyzing a data structure of the basic data.

3. The data processing apparatus of claim 1, wherein the second output data generating section generates data with removing a certain data portion from the first output data, as the second output data.

4. The data processing apparatus of claim 1 further comprising:
a first operation instruction input section that receives a first operation instruction on the first output data outputted from the first output device, and outputs the first operation instruction received to the first output data generating section and the second output data generating section,
wherein the first output data generating section, upon receipt of the first operation instruction from the first operation instruction input section, updates the first output data based on the first operation instruction, and outputs the first output data updated to the first output device, and
wherein the second output data generating section, upon receipt of the first operation instruction from the first operation instruction input section, updates the second output data to reflect an update of the first output data, and outputs the second output data updated to the second output device.

5. The data processing apparatus of claim 1 further comprising:
a second operation instruction input section that receives a second operation instruction on the second output data outputted from the second output device, and outputs the second operation instruction received to the first output data generating section and the second output data generating section,
wherein the second output data generating section, upon receipt of the second operation instruction from the second operation instruction input section, updates the second output data based on the second operation instruction, and outputs the second output data updated to the second output device, and
wherein the first output data generating section, upon receipt of the second operation instruction from the second operation instruction input section, updates the first output data to reflect an update of the second output data, and outputs the first output data updated to the first output device.

6. The data processing apparatus of claim 1, wherein the data analyzing section receives first basic data, which is a basis of data to be outputted from the first output device, and second basic data, which is a basis of data to be outputted form the second output device, and analyzes the first basic data and the second basic data,
wherein the first output data generating section receives an analysis result of the first basic data, and generates the first output data based on the analysis result of the first basic data, and
wherein the second output data generating section receives an analysis result of the second basic data, and generates the second output data based on the analysis result of the second basic data.

7. The data processing apparatus of claim 6, wherein the first output data generating section receives the analysis result of the second basic data in a predetermined case, and generates the first output data, which is identical to the second output data generated by the second output data generating section, based on the analysis result of the second basic data.

8. The data processing apparatus of claim 6, wherein the second output data generating section receives the analysis result of the first basic data in a predetermined case, and generates the second output data, which is identical to the first output data generated by the first output data generating section, based on the analysis result of the first basic data.

9. The data processing apparatus of claim 7 further comprising:
a first history managing section that identifies one of the analysis result of the first basic data and the analysis result of the second basic data, based on which the first output data is generated, and records a generation history of the first output data.

10. The data processing apparatus of claim 8 further comprising:
a second history managing section that identifies one of the analysis result of the first basic data and the analysis result of the second basic data, based on which the second output data is generated, and records a generation history of the second output data.

11. A data processing method for generating data to be outputted from a first output device and data to be outputted from a second output device, the data processing method comprising:
analyzing basic data that is a shared basis of the data outputted from the first output device and the data to be outputted from the second output device;
generating the data to be outputted from the first output device based on the analysis result of the basic data as first output data, and outputting the firth output data generated to the first output device; and
generating the data to be outputted from the second output device, whose contents are different from those of the first output data, based on the analysis result of the basic data, as second output data, and outputting the second output data generated to the second output device.

12. A program for causing a computer to execute generating data to be outputted from a first output device and data to be outputted from a second output device, the program comprising:
a data analyzing process for analyzing data of basic data, which is a share basis of data outputted from the first output device and data outputted from the second output device; and
a first output data generating process and a second output data generating process both for receiving an analysis result of the basic data by the data analyzing process, and sharing the analysis result of the basic data by the data analyzing process,
wherein the first output data generating process generates the data to be outputted from the first output device as first output data based on the analysis result of the basic data by the data analyzing process, and outputting the first output data generated to the first output device, and
wherein the second output data generating process generates the data to be outputted from the second output device, whose contents are different from those of the first output data, as the second output data based on the analysis result of the basic data by the data analyzing process, and outputting the second output data generated to the second output device.
